(19) Europäisches Patentamt
European Patent Office
Office européen des brevets

(11) Veröffentlichungsnummer: **0 561 238 A2**

# (12) EUROPÄISCHE PATENTANMELDUNG

(21) Anmeldenummer: **93103584.4**

(22) Anmeldetag: **05.03.93**

(51) Int. Cl.5: **C08K 5/42**, C08K 5/3417, C08K 5/521, C08K 13/04, C08K 5/09

(30) Priorität: **18.03.92 DE 4208643**
**01.07.92 DE 4221581**

(43) Veröffentlichungstag der Anmeldung:
**22.09.93 Patentblatt 93/38**

(84) Benannte Vertragsstaaten:
**DE FR GB IT NL**

(71) Anmelder: **BAYER AG**

**D-51368 Leverkusen(DE)**

(72) Erfinder: **Horn, Klaus, Dr.**
**Bodelschwinghstrasse 12**
**W-4150 Krefeld(DE)**
Erfinder: **Kirsch, Jürgen, Dr.**
**Völklinger Strasse 20**
**W-5090 Leverkusen 1(DE)**
Erfinder: **Weider, Richard, Dr.**
**Ouettinger Strasse 78**
**W-5090 Leverkusen 3(DE)**
Erfinder: **Obermann, Hugo, Dr.**
**Wedaustrasse 39**
**W-4047 Dormagen 1(DE)**
Erfinder: **Freitag, Dieter, Dr.**
**Hasenheide 10**
**W-4150 Krefeld(DE)**
Erfinder: **Idel, Karsten-Josef, Dr.**
**Am Schwarzkamp 38**
**W-4150 Krefeld(DE)**

(54) **Verwendung von Salzen in Kombination mit halogenierten Phthalimiden zur Flammfestausrüstung von glasfaserhaltigen Polycarbonatformkörpern.**

(57) Gegenstand der vorliegenden Erfindung ist die Verwendung von Salzen von Sulfonsäuren, Phosphonsäuren und/oder Carbonsäuren in Kombination mit halogenierten Phthalimiden zur Weiterverarbeitung von glasfaserhaltigen Polycarbonatformkörpern.

EP 0 561 238 A2

Gegenstand der vorliegenden Erfindung ist die Verwendung von Salzen von Sulfonsäuren, Phosphonsäuren und/oder Carbonsäuren in Kombination mit halogenierten Phthalimiden zur Weiterverarbeitung von glasfaserhaltigen Polycarbonatformkörpern, wobei die Verwendung von Salzen von Sulfonsäuren in Kombination mit halognierten Phthalimiden besonders bevorzugt ist.

Glasfaserverstärkte Polycarbonate erreichen gemäß Underwriters' Laboratories Inc., Bulletin 94, Verbrennungstests zur Klassifizierung von Materialien (nachfolgend UL 94 bzeichnet), bei Prüfkörpern mit den Maßen 127 x 12 x 3,2 mm (1/8") und 127 x 12 x 1,6 mm (1/16") keine Einstufung in die Brandklasse V-0, sondern nur V-1 oder V-2.

Erst durch Zusatz von Flammschutzadditiven beispielsweise auf Basis von geeigneten aromatischen oder aliphatischen Sulfonsäuresalzen, oder anderer geeigneter organischer Salze, wird im UL 94-Test ein V-0 in 3,2 und 1,6 mm erreicht.

Die Wirkung von aromatischen Sulfonsäuresalzen als Flammschutzadditiv für Polycarbonate ist beispielsweise in US 3 933 734 oder US 3 940 366 beschrieben. Auch der Zusatz von Sulfonsäuresalzen von aromatischen Carbonsäuren, Carbonsäureestern und Ketonen zu Polycarbonaten ist bereits beschrieben (siehe beispielsweise US 3 953 399; US 3 926 908; US 4 104 246).

Aus wirtschaftlichen Gründen ist es wünschenswert, Angüsse und fehlerhafte Spritzgußteile wieder zu schreddern, der Primaware beizumischen und dem Spritzgußprozeß wieder zuzuführen (Regeneratverarbeitung).

Der Nachteil dieser Vorgehensweise ist jedoch, daß mit Sulfonsäuresalzen flammgeschützte glasfaserverstärkte Polycarbonate unter Verwendung von Regeneratzusatz kein sicheres V-0 im UL 94-Test erreichen. Schon bei Zusätzen von nur 20 Gew.-% wird kein V-0 mehr erreicht.

Entsprechendes gilt für glasfaserverstärkte Polycarbonatformkörper, die mit Salzen von Phosphonsäuren oder Carbonsäuren flammwidrig ausgerüstet sind.

Demgegenüber war es überraschend, daß bei zusätzlicher Mitverwendung von halogenierten Phthalimiden, vorzugsweise von solchen der Formel (I) und/oder (II), besonders bevorzugt von solchen der Formel (II),

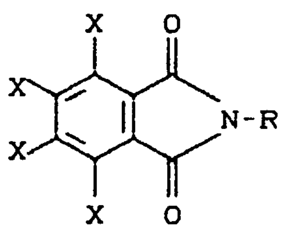

(I)

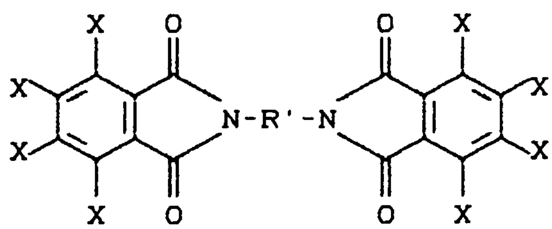

(II)

worin

X Cl, Br

R $C_1$-$C_4$-Alkyl, $C_6H_5$, $C_{10}H_7$, $C_6H_9X$, $C_6H_3X_2$ oder $C_6H_2X_3$ ist mit X = Fluor, Chlor oder Brom, und worin

R' eine Einfachbindung, $C_2$-$C_8$-Alkylen, $C_6H_4$ oder p-Diphenylen vorzugsweise $C_6$-Alkylen ist,

die glasfaserhaltigen Polycarbonate mit einem Gehalt von 0,01 Gew.-% bis 5,0 Gew.-%, insbesondere von 0,03 Gew.-% bis 0,5 Gew.-% an den oben erwähnten Sulfonsäuresalzen und/oder Phosphonsäuresalzen und/oder Carbonsäuresalzen auch nach mehrfacher Verarbeitung (Regeneratverarbeitung) ein V-0 bei 1,6 mm Dicke nach UL 94 und sogar ein V0 bei 1,2 mm beibehalten. Die Gewichtsprozente beziehen sich hierbei jeweils auf Gewicht Polycarbonat ohne Glasfaserzusatz.

Die Menge an einzusetzenden halogenierten Phthalimiden beträgt 0,005 Gew.-% bis 3,0 Gew.-%, vorzugsweise 0,1 Gew.-% bis 1,0 Gew.-%, bezogen jeweils auf Gewicht Polycarbonat ohne Glasfaserzusatz.

Die vorliegende Erfindung gestattet somit die Herstellung von flammwidrigen, glasfaserverstärkten Polycarbonatharzen durch Wiederverwendung von glasfaserhaltigen Polycarbonatformkörpern oder anders ausgedrückt, die Verarbeitung von glasfaserhaltigen Formkörpern, beispielsweise in Form von Abfall oder alten Spritzgußpartikeln, zu flammwidrigen (V-0 bei 1,6 mm) glasfaserhaltigen Polycarbonatharzen, die dann ihrerseits wieder zu flammwidrigen Polycarbonatformkörpern verarbeitet werden können.

Die erfindungsgemäße Herstellung von flammwidrigen glasfaserhaltigen Polycarbonatharzen, die vorzugsweise 7 Gew.-% bis 45 Gew.-% und insbesondere 10 Gew.-% bis 20 Gew.-% Glasfasern enthalten

sollen, bezogen jeweils auf Gewicht Polycarbonatharz, erfolgt somit vorzugsweise auf dreierlei Weise

1. indem glasfaserhaltige Polycarbonatformkörper geschreddert werden und danach mit den erfindungsgemäß geeigneten Salzen der Sulfonsäuren, Phosphonsäuren und/oder Carbonsäuren und mit den erfindungsgemäß geeigneten halogenierten Phthalimiden und gegebenenfalls mit Polycarbonatharz und/oder Glasfasern zusammen in bekannter Weise über die Schmelze zu glasfaserhaltigem, flammwidrigem Polycarbonatharz verarbeitet werden, oder

2. indem glasfaserhaltige Polycarbonatformkörper, die bereits die erfindungsgemäß geeigneten Salze der Sulfonsäuren, Phosphonsäuren und/oder Carbonsäuren eingearbeitet enthalten, geschreddert werden und danach mit den erfindungsgemäß geeigneten halogenierten Phthalimiden und gegebenenfalls mit Polycarbonatharz und/oder Glasfasern zusammen in bekannter Weise über die Schmelze zu glasfaserhaltigem, flammwidrigem Polycarbonatharz verarbeitet werden, oder

3. glasfaserhaltige Polycarbonatformkörper, die bereits die erfindungsgemäß geeigneten Salze der Sulfonsäuren, Phosphorsäuren und/oder Carbonsäuren und die erfindungsgemäß geeigneten halogenierten Phthalimide eingearbeitet enthalten, geschreddert werden und danach gegebenenfalls mit Polycarbonatharz und/oder Glasfasern zusammen in bekannter Weise über die Schmelze zu glasfaserhaltigem, flammwidrigem Polycarbonatharz verarbeitet werden.

Die Verarbeitung über die Schmelze erfolgt in allen drei Fällen beispielsweise in einem Extruder oder einer Spritzgußmaschine.

Gegenstand der vorliegenden Erfindung ist somit auch ein Verfahren zur Herstellung von flammwidrigen, glasfaserhaltigen Polycarbonatharzen aus glasfaserhaltigen Polycarbonatformkörpern, das dadurch gekennzeichnet ist, daß man

entweder glasfaserhaltige Polycarbonatformkörper schreddert und danach mit den erfindungsgemäß geeigneten Salzen der Sulfonsäuren, Phosphonsäuren und/oder Carbonsäuren und mit den erfindungsgemäß geeigneten, halogenierten Phthalimiden und gegebenenfalls mit Polycarbonatharz und/oder Glasfasern zusammen in bekannter Weise über die Schmelze zu glasfaserhaltigem, flammwidrigem Polycarbonatharz verarbeitet,

oder daß man glasfaserhaltige Polycarbonatformkörper, die bereits die erfindungsgemäß geeigneten Salze der Sulfonsäuren, Phosphonsäuren und/oder Carbonsäuren eingearbeitet enthalten, schreddert und danach mit den erfindungsgemäß geeigneten halogenierten Phthalimiden und gegbenenfalls mit Polycarbonatharz und/oder Glasfasern zusammen in bekannter Weise über die Schmelze zu glasfaserhaltigem, flammwidrigem Polycarbonatharz verarbeitet,

oder daß man glasfaserhaltige Polycarbonatformkörper, die bereits die erfindungsgemäß geeigneten Salze der Sulfonsäuren, Phosphonsäuren und/oder Carbonsäuren sowie die erfindungsgemäß geeigneten halogenierten Phthalimide eingearbeitet enthalten, schreddert und danach gegebenenfalls mit Polycarbonatharz und/oder Glasfasern zusammen in bekannter Weise über die Schmelze zu glasfaserhaltigem, flammwidrigem Polycarbonarharz verarbeitet.

Polycarbonatharze im Sinne der vorliegenden Erfindung sind aromatische Homopolycarbonate oder Copolycarbonate auf Basis von Diphenolen, insbesondere von Dihydroxydiarylalkanen oder -cycloalkanen, die bereits mit Phosgen oder Diestern der Kohlensäure erhältlich sind, wobei außer den unsubstituierten Dihydroxydiarylalkanen bzw. -cycloalkanen auch solche geeignet sind, deren Arylreste in o- und/oder m-Stellung zur Hydroxylgruppe Methylgruppen oder Halogenatome tragen. Es sind sowohl lineare als auch verzweigte Polycarbonate geeignet.

Die Polycarbonatharze haben mittlere Gewichtsmittel-Molekulargewichte $\overline{M}w$ zwischen 10 000 und 100 000, vorzugsweise zwischen 20 000 und 40 000, ermittelt durch Messungen der rel. Viskosität in $CH_2Cl_2$ bei 25 °C und einer Konzentration von 0,5 g/pro 100 ml.

Geeignete Diphenole sind z.B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen.

Als Kettenabbrecher dienen Phenole, bevorzugt $C_1$-$C_{10}$-Alkyl-Phenole und insbesondere verzweigte $C_8$-$C_9$-Alkyl-Phenole.

Bevorzugt sind Polycarbonate auf Basis Bis-(4-hydroxyphenyl)-propan-2.2 (Bisphenol A), Bis-(4-hydroxy-3,5-dichlor-phenyl)-propan-2.2 (Tetrachlorbisphenol A), Bis-(4-hydroxy-3,5-dibromphenyl)-propan-2.2 (Tetrabrombisphenol A), Bis-(4-hydroxy-3,5-dimethyl-phenyl)-propan-2.2 (Tetramethylbisphenol A), Bis-(4-hydroxy-phenyl)-cyclohexan-1.1 (Bisphenol Z), Bis-(4-hydroxyphenyl)-3.3.5-trimethyl-cyclohexan-1.1 sowie auf Basis von Dreikernbisphenolen wie $\alpha,\alpha'$-Bis-(4-hydroxyphenyl)-p-diisopropylbenzol.

Weitere für die Herstellung der Polycarbonate geeignete Diphenole sind in den US-Patenten 2 970 131, 2 991 273, 2 999 835, 2 999 846, 3 028 365, 3 062 781, 3 148 172, 3 271 367, 3 275 601 und 4 982 014 beschrieben.

Die Polycarbonatharze fallen als Granulat, Pulver, feste Lösungen oder krümelbare Masse an und können in dieser Form erfindungsgemäß verwendet werden.

Polycarbonatformkörper sind Gegenstände wie sie durch beliebige Verformungsverfahren aus den Polycarbonatharzen hergestellt wurden, beispielsweise durch Spritzguß oder Extrusion.

Aus US-PS 4 581 396 (Raychem. Corp.) sind Kunststoffe mit einem Gehalt an halogenierten Bisimiden und gegebenenfalls anderen Flammschutzmitteln bekannt. Als andere Flammschutzmittel sind Verbindungen der 5. Gruppe des periodischen Systems der Elemente geeignet. Polycarbonate sind als Kunststoffe in dem US-PS nicht genannt.

Aus DE-OS 2 148 598 (Le A 13 970) (US-PS 3 845 007) sind flammfeste thermoplastische Formmassen und Formkörper bekannt, die halogenhaltiges Polycarbonat, Salze von Alkali- oder Nickel-Metallen und Glasfasern in Mengen von 2 bis 6 Gew.-% enthalten. Die Wiederverwertung und Aufarbeitung dieser Formkörper ist nicht in der DE-OS erwähnt.

Aus JA 75-119 041 sind Polycarbonate mit einem Gehalt an halogenierten Phthalimiden von 1 bis 50 %, anderen Flammschutzmitteln und Glasfasern bekannt. Das Thema Wiederaufarbeitung ist in dieser Literaturstelle gemäß der uns vorliegenden englischen Übersetzung nicht angesprochen.

Aus der DE-OS 26 31 756 sind Polycarbonate bekannt, die durch Zusätze von halogenierten, organischen Verbindungen und Alkalisalzen von anorganischen Schwefelverbindungen flammwidrig gemacht werden. Zusätzlich können Glasfasern eingesetzt werden. Auch in dieser Literaturstelle ist das Thema Recycling nicht angesprochen.

Aus der DE-OS 27 44 016 beziehungsweise US-PS 4 110 299 sind Polycarbonate bekannt, die organische Alkalimetallsalze und organische Halogenide enthalten (Anspruch 1). Zusätzlich können Glasfasern zugesetzt werden (Anspruch 15). Auch in dieser Literaturstelle ist das Thema Recycling nicht angesprochen.

Aus der DE-OS 27 03 710 (Le A 17 759) (US-PS 4 108 489) sind Polycarbonate mit Alkalisalzen organischer Säuren und halogenierten Phthalimiden bekannt. Glasfaserzusatz ist nicht erwähnt, ebensowenig das Thema Wiederverwendung bzw. Wiederaufarbeitung der flammwidrigen Polycarbonate dieser DE-OS.

Aus der DE-OS 29 18 882 (Le A 19 568) sind flammwidrige Polycarbonatformmassen bekannt, mit einem Gehalt an organischen Halogenverbindungen, Alkalisalzen organischer Säuren und Antitropfmitteln. Als organische Halogenverbindungen eignen sich auch Tetrahalogenphthalimide. Als Alkalisalze auch solche von Sulfonsäuren, Phosphonsäuren und Carbonsäuren; als Antitropfmittel eignen sich auch Glasfasern. Die Wiederaufarbeitung ist in dieser DE-OS nicht angesprochen. Entsprechendes gilt auch für die Lehre der DE-OS 29 18 883 (Le A 19 569).

Aus der EP-0 086 353 (Le A 21 535) (US-PS 4 552 911) sind flammwidrige Polycarbonatformmassen mit einem Gehalt an Alkalisalzen organischer Säuren, halogenierten Phthalimiden und Glasfasern bekannt. Die Polycarbonate sind verzweigt, als Alkalisalze von organischen Säuren sind solche von Sulfonsäuren und Carbonsäuren geeignet und zusätzlich müssen die Formmassen 0,1 bis 7 Gew.-% Brom enthalten, entweder in Form von einkondensierten Monomeren in das Polycarbonat oder in Form von zugemischten, niedermolekularen Bromverbindungen. Das Thema Recyclierung von Polycarbonatformkörpern ist auch in der EP 0 086 353 nicht angesprochen.

Somit ist der Gegenstand der vorliegenden Erfindung aus dem Stand der Technik weder bekannt noch nahegelegt.

Salze von Sulfonsäuren, Phosphonsäuren und Carbonsäuren sind die Alkalisalze, Erdalkalisalze und Ammoniumsalze, vorzugsweise die Alkalisalze und insbesondere die Li-Salze, Na-Salze und K-Salze.

Beispiele für derartige Salze sind die im Stand der Technik bekannten, und als Flammschutzmittel für Polycarbonate ausgewiesenen Salze von Sulfonsäuren, Phosphonsäuren und Carbonsäuren, wie Natrium- oder Kaliumperfluorbutansulfonat, Natrium- oder Kaliumperfluoroctansulfonat, Natrium- oder Kalium-methylphosphonat, Natrium- oder Diphenylsulfonsulfonat-Na- oder -K.

Als geeignete Tetrachlorphthalimide im Sinne der Erfindung gemäß Formel (I) seien beispielsweise genannt

N-Methyl-tetrachlorphthalimid
N-Ethyl-tetrachlorphthalimid
N-Propyl-tetrachlorphthalimid
N-Isopropyl-tetrachlorphthalimid
N-Butyl-tetrachlorphthalimid

N-Isobutyl-tetrachlorphthalimid
N-Phenyl-tetrachlorphthalimid.

Als geeignete Tetrachlorphthalimide im Sinne der Erfindung gemäß Formel (II) seien beispielsweise genannt
N,N'-Ethylen-di-tetrachlorphthalimid
N,N'-Propylen-di-tetrachlorphthalimid
N,N'-Butylen-di-tetrachlorphthalimid
N,N'-Hexylen-di-tetrachlorphthalimid
N,N'-p-Phenylen-di-tetrachlorphthalimid.

Besonders geeignet im Sinne der Erfindung ist N,N'-Hexylen-ditetrachlorphthalimidund N,N'-Ethylen-ditetrachlorphthalimid.

Geeignete Glasfasern im Sinne der vorliegenden Erfindung sind alle im Handel erhältlichen Glasfasersorten und -typen, also geschnittene Glassorten (Langglasfasern) (chopped strands) und Kurzglas (milled fibres), sofern sie durch geeignete Schlichten Polycarbonat-verträglich ausgerüstet sind. Die zur Herstellung der Formmassen verwendeten Glasfasern sind aus E-Glas hergestellt. Unter E-Glas versteht man nach DIN 1259 ein Aluminium-Bor-Silikat-Glas, mit einem Alkalioxid-Gehalt unter 1 Gew.-%. Üblicherweise werden Glasfasern mit einem Durchmesser von 8 bis 20 µm und einer Länge von 3 bis 6 mm (chopped strands) verwendet. Es kann auch Kurzglas zum Einsatz kommen (milled fibres), ebenso geeignete Glaskugeln.

Die nach dem erfindungsgemäßen Verfahren erhältlichen flammwidrigen, glasfaserhaltigen Polycarbonatharze sind wiederum für die Herstellung von flammwidrigen Polycarbonatformkörpern geeignet, und zwar wie Extrusion oder Spritzguß. Geeignete Formkörper sind beispielsweise Folien, Platten, Hohlkammerplatten, Leuchten, Gehäuse für Elektrogeräte oder ähnliches.

Den erfindungsgemäß erhältlichen flammwidrigen, glasfaserhaltigen Polycarbonatharzen können vor oder während der Verarbeitung zu Polycarbonatformkörpern noch die üblichen Additive wie beispielsweise Stabilisatoren gegen $H_2O$, Hitze und UV-Strahlung, Pigmente, Füllstoffe und Entformungsmittel in bekannter Weise und in den bekannten Mengen eingearbeitet werden.

Der Einsatz der aus den erfindungsgemäß erhältlichen Polycarbonatharzen hergestellten flammwidrigen Polycarbonatformkörper kann beispielswise auf dem Elektrosektor, für Computergehäuse, im Beleuchtungssektor oder im Automobilbereich erfolgen.

Beispiele:

Beispiel 1

5 kg Formkörper bestehend aus 10 Gew.-% glasfaserverstärktem Polycarbonat (nicht enthaltend Flammschutzsalze und/oder halogenhaltige Phthalimide) wurden geschreddert und anschließend wurden der Schredderware 0,15 Gew.-% Kaliumperfluorbutansulfonat und 0,5 Gew.-% Hexamethylenbistetrachlorphthalimid zugesetzt.

Die Mischung wurde anschließend auf einer Spritzgußmaschine bei einer Massetemperatur von 280 °C zu Prüfkörpern mit den Abmessungen 127x12,7x1,6 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse VO zugeordnet.

Vergleichsbeispiel 1

Es wurde verfahren wie bei Beispiel 1, jedoch ohne Zusatz von 0,15 Gew.-% Kaliumperfluorbutansulfonat und 0,5 Gew.-% Hexamethylenbistetrachlorphthalimid. Dem Material wurde die Brennbarkeitsklasse V2 zugeordnet.

Beispiel 2

5 kg Formkörper bestehend aus 10 Gew.-% glasfaserverstärktem Polycarbonat mit 0,15 Gew.-% Kaliumperfluorbutansulfonat flammfest ausgerüstet (d.h. VO in 1,6 mm) (nicht enthaltend halogenhaltige Phthalimide) wurden geschreddert und anschließend wurden der Schredderware 0,5 Gew.-% Hexamethylenbistetrachlorphthalimid zugesetzt.

Die Mischung wurde anschließend auf einer Spritzgußmaschine bei einer Massetemperatur von 280 °C zu Prüfkörpern mit den Abmessungen 127x12,7x1,6 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse VO zugeordnet.

Vergleichsbeispiel 2

Es wurde verfahren wie bei Beispiel 2, jedoch ohne Zusatz von 0,5 Gew.-% Hexamethylenbistetrachlorphthalimid. Dem Material wurde die Brennbarkeitsklasse V2 zugeordnet.

Beispiel 3

Ein Bisphenol-A-Polycarbonat mit einer Viskosität von Eta Rel = 1,305 wurde in einem Doppelwellenextruder bei Temperaturen von 300-320 °C aufgeschmolzen. Dann dosierte man eine Mischung aus chopped strands, 0,5 Gew.-% Entformungsmittel, 0,15 Gew.-% Kaliumperfluorbutansulfonat und 0,30 Gew.-% Hexamethylenbistetrachlorphthalimid direkt in die Polycarbonatschmelze.

Der Polymerstrang wurde gekühlt und granuliert.

Das Granulat wurde getrocknet (Vakuumtrockenschrank) und anschließend auf einer Spritzgußmaschine bei einer Massetemperatur von 280 °C zu Prüfkörpern mit den Abmessungen 127x12,7x1,6 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen und der Brennbarkeitsklasse VO zugeordnet.

Beispiel 4

5 kg Formkörper bestehend aus dem Compound aus Beispiel 3 wurden geschreddert.

10 Gew.-% dieser Schredderware wurden dem Compound aus Beispiel 3 untergemischt.

Die Mischung wurde anschließend auf einer Spritzgußmaschine bei einer Massetemperatur von 280 °C zu Prüfkörpern mit den Abmessungen 127x12,7x1,6 mm und 127x12,7x1,2 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse VO in 1,6 und 1,2 mm zugeordnet.

Beispiel 5

5 kg Formkörper aus Beispiel 4 wurden geschreddert.

20 Gew.-% dieser Schredderware wurden dem Compound aus Beispiel 3 untergemischt.

Die Mischung wurde anschließend auf einer Spritzgußmaschine bei einer Massetemperatur von 280 °C zu Prüfkörpern mit den Abmessungen 127x12,7x1,6 mm und 127x12,7x1,2 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse VO in 1,6 und 1,2 mm zugeordnet.

Beispiel 6

5 kg Formkörper bestehend aus dem Compound aus Beispiel 3 wurden geschreddert.

Die Mischung wurde anschließend auf einer Spritzgußmaschine bei einer Massetemperatur von 280 °C zu Prüfkörpern mit den Abmessungen 127x12,7x1,6 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse VO zugeordnet.

Beispiel 7

5 kg Formkörper bestehend aus 10 Gew.-% glasfaserverstärktem Polycarbonat (nicht enthaltend Flammschutzsalze und/oder halogenhaltige Phthalimide) wurden geschreddert und anschließend wurden der Schredderware 0,10 Gew.-% Kalium-methylphosphonat und 0,5 Gew.-% Hexamethylenbistetrachlorphthalimid zugesetzt.

Die Mischung wurde anschließend auf einer Spritzgußmaschine bei einer Massetemperatur von 280 °C zu Prüfkörpern mit den Abmessungen 127x12,7x1,6 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse VO zugeordnet.

Vergleichsbeispiel 3

Es wurde verfahren wie bei Beispiel 7, jedoch ohne Zusatz von 0,10 Gew.-% Kalium-methylphosphonat und 0,5 Gew.-% Hexamethylenbistetrachlorphthalimid. Dem Material wurde die Brennbarkeitsklasse V2 zugeordnet.

## Patentansprüche

1. Verwendung von Salzen von Sulfonsäuren, Phosphonsäuren und/oder Carbonsäuren im Kombination mit halogenierten Phthalimiden zur Weiterverarbeitung von glasfaserhaltigen Polycarbonatformkörpern.

2. Verwendung von Salzen von Sulfonsäuren gemäß Anspruch 1.

3. Verfahren zur Herstellung von flammwidrigen, glasfaserhaltigen Polycarbonatharzen aus glasfaserhaltigen Polycarbonatformkörpern, dadurch gekennzeichnet, daß man
entweder glasfaserhaltige Polycarbonatformkörper schreddert und danach mit Salzen von Sulfonsäuren, Phosphonsäuren und/oder Carbonsäuren und mit halogenierten Phthalimiden und gegebenenfalls mit Polycarbonatharz und/oder Glasfasern zusammen in bekannter Weise über die Schmelze zu glasfaserhaltigem, flammwidrigem Polycarbonatharz verarbeitet,
oder daß man glasfaserhaltige Polycarbonatformkörper die bereits Salze von Sulfonsäuren, Phosphonsäuren und/oder Carbonsäuren eingearbeitet enthalten, schreddert und danach mit halogenierten Phthalimiden und gegebenenfalls mit Polycarbonatharz und/oder Glasfasern zusammen in bekannter Weise über die Schmelze zu glasfaserhaltigem, flammwidrigem Polycarbonatharz verarbeitet,
oder daß man glasfaserhaltige Polycarbonatformkörper, die bereits Salze von Sulfonsäuren, Phosphonsäuren und/oder Carbonsäuren sowie halogenierte Phthalimide eingearbeitet enthalten, schreddert und danach gegebenenfalls mit Polycarbonatharz und/oder Glasfasern zusammen in bekannter Weise über die Schmelze zu glasfaserhaltigem, flammwidrigem Polycarbonatharz verarbeitet.